**Europäisches Patentamt**

**European Patent Office**

**Office européen des brevets**

(11) Publication number: **0 152 291**
**B1**

# EUROPEAN PATENT SPECIFICATION

(45) Date of publication of patent specification: **16.05.90**

(51) Int. Cl.⁵: **A 01 D 75/18, A 01 D 82/00**

(21) Application number: **85300863.9**

(22) Date of filing: **08.02.85**

(54) Apparatus for picking up and conveying crop or other material.

(30) Priority: **14.02.84 GB 8403838**
**29.06.84 GB 8416568**

(43) Date of publication of application:
**21.08.85 Bulletin 85/34**

(45) Publication of the grant of the patent:
**16.05.90 Bulletin 90/20**

(84) Designated Contracting States:
**DE FR IT NL**

(56) References cited:
**EP-A-0 100 628**
**EP-A-0 129 007**
**DE-A-2 447 078**
**FR-A-2 205 263**
**FR-A-2 485 326**
**GB-A-1 010 176**
**GB-A-1 602 475**
**NL-A-6 605 614**
**US-E- 23 972**

(73) Proprietor: **NATIONAL RESEARCH DEVELOPMENT CORPORATION**
**101 Newington Causeway**
**London SE1 6BU (GB)**

(72) Inventor: **Klinner, Wilfred Erwin**
**Beechwood Heath Lane Aspley Heath Woburn Sands**
**Milton Keynes Buckinghamshire (GB)**

(74) Representative: **Laight, Martin Harvey et al**
**W H Beck, Greener & Company 7 Stone Buildings Lincoln's Inn**
**London WC2A 3SZ (GB)**

Courier Press, Leamington Spa, England.

## Description

The present invention relates to apparatus for picking up and conveying crop or other material, and is concerned in particular, but not exclusively, with forage harvesters for picking up previously cut crop lying on the ground, or for picking up crop from the rear of a cutting device.

It is a well known hazard of forage harvesters, particularly of the precision chop type, that objects differing from the crop, for example stones, pieces of metal, and like objects heavier than the crop, tend to be fed to the chopping mechanism along with the cut crop. This may occur both when the crop is cut by the forage harvester, and when the crop has been cut previously and is merely picked up by the forage harvester, for example after a period of field wilting. It is known in such apparatus to provide a vibration detector such as an accelerometer or a microphone for detecting vibrations caused by objects striking parts of the apparatus, and to provide a moveable deflector plate for deflecting objects out of the normal crop path under the control of an actuator responsive to the vibration detector. Such an apparatus is described in our U.K. Patent No. 1602475.

It is also known to provide on a forage harvester an electromagnetic metal detector incorporated in the feed roller system, and to arrange the detector with its field of sensing directed in various positions so as to attempt to avoid interference from metal components of the apparatus, or to attempt to give a predetermined interference which can be filtered out or otherwise dealt with by electronic circuitry. Such arrangements are discussed in a paper entitled Electronic Metal Detection for Forage Harvesters by C. E. Bohman and T. L. Stiefvater, in Grain and Forage Harvesting, pages 270 to 273, published in Proc. Int. Grain & Forage Harv. Conf. ASAE/CIGR, Ames, Iowa, Sept 1977.

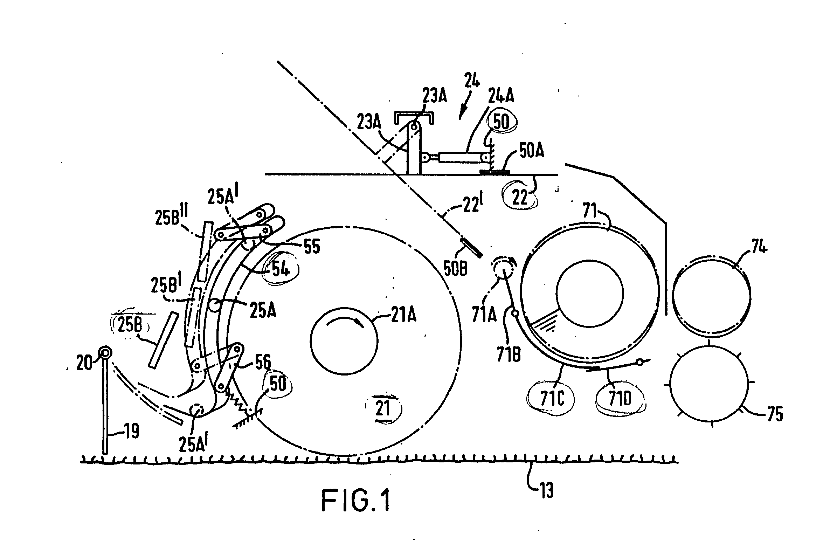

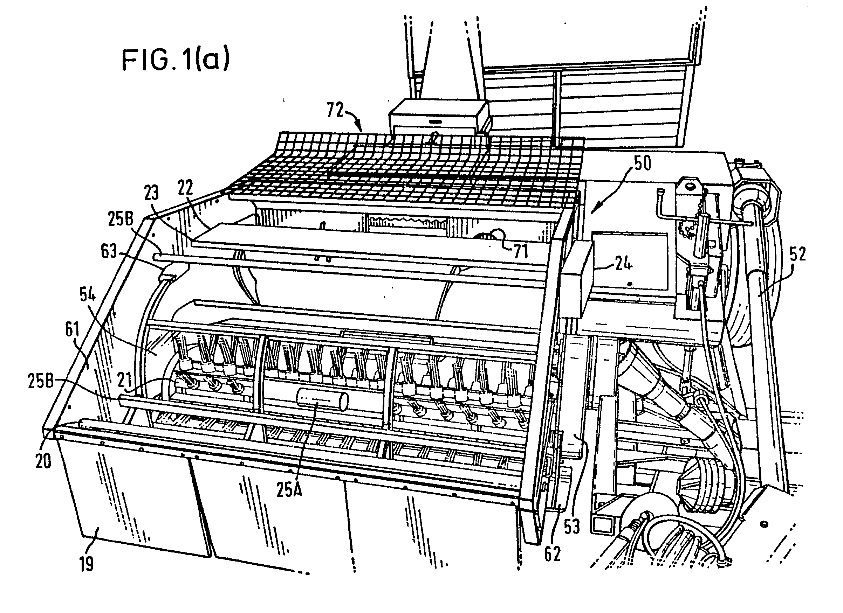

It is also known that in order to make it possible for high-speed crop engaging rotors to lift fibrous crops for purposes of treating and/or conveying the material, it is necessary to provide a housing, also known as a hood, shroud, cowling or cover, over at least the front part of the rotor. The shape of the hood and its relative position to the rotor, particularly the vertical clearance above the crop layer to be engaged and the radial clearance at the intake and exit regions, vitally affect the performance and power requirement of the unit as a whole. Because crop yields may vary from very light to exceptionally heavy, adjustment is needed in the vertical and radial clearances of the hood at the intake region. It is known to provide over a pick-up rotor a rotor cover which is pivotted to allow movement of the pivotted rotor cover away from the rotor. Such an arrangement is shown for example in Figure 1 of US Patent 3,676,988 (Hauser-Lienhard), and in Figure 9 of GB Patent 1214840 (Vissers).

The present invention is not concerned with relatively slow-speed pick-ups of the type in which tines are moved along a path predetermined by a cam track, scoop up previously cut crop, and have the crop removed from the tines by cooperation with a series of metal straps adjacent to slits through which the tines move. The present invention is concerned with high-speed pick-up rotors. In one aspect, a high-speed pick-up rotor may be regarded as a rotor driven at a speed of rotation such that at least at the region where the crop is picked up, the crop engaging elements move faster than the crop during acceleration, that a housing in front of at least part of the rotor above the intake region prevents crop from being thrown forward, and that at the release region the crop is released at least predominantly by the effect of centrifugal force, although the release may be assisted by additional means. In another aspect, a high-speed pick-up rotor may be regarded as a rotor which accelerates material with which it comes, or is brought, into contact and is capable of transferring the material into a different plane or path of movement. In a further aspect, a high-speed pick-up rotor may be regarded as a rotor which accelerates material by lifting it against the resistance provided by a front cover through a restriction into a diverging passage. By way of example a high-speed rotor may operate at rotational speeds in the range 400 to 900 rev/min. By another criterion, the rate of rotation may be such that the circumferential tip velocity of a crop engaging element is in the range 10 to 25 m/s.

It is an object of the present invention to provide in conveying apparatus an improved arrangement for detecting and rejecting foreign objects.

According to the present invention there is provided conveying apparatus comprising a main frame, a high-speed conveying rotor for conveying material comprising an inner core structure and a plurality of outwardly extending elements for engaging the material, a hood co-operating with the rotor and defining between the hood and part of the periphery of the rotor a passage along which material is conveyed by the rotor, detection means for detecting unwanted objects conveyed by the rotor with the material, and diverting means for diverting for a short period of time that portion of the material stream containing the unwanted object so that it is prevented from proceeding further in the general direction of normal material flow, characterised in that the said elements of the rotor are made of nonmetallic material so as to provide an outer annular zone of the rotor which is free of metal components, and the detection means comprises a detector for detecting metal by sensing a response to a signal generated by the detector caused only by the presence of metal in the material stream, the metal detector being mounted at a position forward of a vertical plane passing through the rotor axis, and being positioned with its field of detection directed so as to extend into the outer annular zone of the rotor which is free of metal components.

Preferably the detection means further comprises an impact detector for detecting impacts on the inner side of the hood of unwanted objects other than the material being conveyed.

The invention has particular application where there is provided mounting means for mounting the hood so as to be moveable relative to the rotor during operation, the hood being moveable in response to, and by the effect of, the material to effect automatic adjustment of the clearance at the entrance to the said material flow passage and where the said rotor is mounted for rotation about a substantially horizontal axis, and the drive means is arranged to drive the conveying rotor in rotation in a sense such that the rotor picks up material and carries the material upwardly and rearwardly over the rotor, the said hood extending at least around part of the front half of the rotor.

The invention also has particular application in apparatus for picking up and conveying crop in which the frame is a mobile frame for movement across the ground, the conveying rotor is mounted for rotation about an axis substantially parallel to the ground for picking up and conveying crop, and the hood extends at least around part of the front half of the rotor and defines with the rotor the said crop flow passage, there being provided drive means for driving the conveying rotor in rotation in a sense such that the rotor picks up crop and conveys the crop upwardly and rearwardly over the rotor.

By a high-speed conveying rotor is meant a rotor for conveying material, mounted in cooperation with a hood extending around part of the rotor, and driven in rotation by drive means, the hood co-operating with the rotor and defining between the hood and part of the periphery of the rotor a passage along which material is conveyed by the rotor, the drive means being arranged to drive the rotor in rotation at a speed such that the rotor accelerates the material during movement of the material through the passage defined between the hood and the periphery of the rotor; such that, at least during acceleration, the periphery of the rotor moves faster than the material; and such that, after the conveying, the material is released from the rotor at least predominantly by centrifugal effect.

Preferably the detection means is arranged to respond to objects defined by either of two different criteria, namely to respond to any objects (whether metallic or non-metallic) which are relatively heavy (that is to say that they have a density and mass substantially different from the crop), and to respond to any objects (whether large or small) which are metallic. Conveniently the detection of heavy objects is achieved by detecting impact of objects on the underside of the hood (for example by a vibration detector for detecting vibrations in the hood caused by such impact), and the detection of metallic objects is achieved by, for example, an electromagnetic metal detector. However, metallic objects may be detected by other means, for example by density measurements.

Preferably at least one of the said impact detector and the said metal detector are mounted on the moveable hood for movement therewith.

Also in a preferred arrangement, the hood is formed at least in part by a hollow enclosure member, the detection means being mounted in the said hollow enclosure member and being at least partly enclosed thereby. Preferably the detection means is entirely enclosed by the hollow enclosure member of the hood, and preferably is sealed to prevent access of dirt, dust and moisture to the detection means. Conveniently the hollow enclosure member forms a resonance chamber, which improves the detection of impacts by an impact detector as set out above.

The positioning of the impact detector and/or the electromagnetic detector inside a hollow enclosure member has a number of advantages. The detectors, e.g. a number of microphones, are kept clean, and in preferred forms it is possible to arrange for the hollow member to improve the output signal by amplifying the effect of impacts. Also it is possible to mount the microphones within the hollow enclosure member without mounting directly onto a surface which is subject to shock by impact.

In a preferred arrangement, the impact detector and the metal detector are both mounted in the hollow member of a moveable hood, but either the impact detector or the metal detector may be mounted on a member which is static relative to the frame in operation, and which extends across the path of the conveyed crop in a position which leaves the metal detector free from interference by metal components of the rotor, should any be present.

In one arrangement, the metal detector on the said static member is positioned to the rear of the moveable hood and is positioned with its field of detection directed downwardly into the moving stream of conveyed crop through a gap between the hood and the moveable deflector means.

In another arrangement, the electromagnetic detector is positioned in front of the moveable hood with its field of detection directed downwardly towards a region at the front of the conveying rotor.

In preferred arrangements, the mounting means are such as to provide circumferential movement of the hood relative to the frame and around the rotor. The circumferential movement may lie along a circle which is concentric with the centre of the rotor, or more usually the circumferential movement will lie along a curved path spaced from and lying around the outer envelope of the rotor but not along a circular path. In general the term circumferential movement of the hood means movement along a curved path spaced from and lying around the outer envelope of the rotor and such movement may or may not be concentric relative to the rotor.

Preferably the said hood is mounted in such a manner that an increase in crop load increases both the vertical clearance between the front of the hood and the ground and the horizontal clearance between the front of the hood and the rotor at the entrance to the crop flow passage.

Also it is preferred that the mounting means constrains the said hood to move along a substantially predetermined path in response to, and by the effect of, changes in crop load.

Normally, but not essentially, it will be arranged that the hood is moveable in response to, and by the effect of, an increase in crop load to effect an overall increase in the clearance presented to the crop along the crop flow passage. By this is meant that the clerance presented to the crop along the crop passage is not normally at any point reduced in response to an increase in crop load.

In a convenient arrangement, the said mounting means comprises at least two mounting linkages spaced apart along the direction of the crop flow passage, the linkages being arranged to allow movement of the hood upwardly and rearwardly but to constrain the hood to movement along a substantially predetermined path. The invention is particularly applicable when used with a rotor as set out in our published pending U.K. Patent Application No. 2075816A, which comprises a brush-like structure having a multiplicity of stiff resilient elongate elements which are arranged in tufts of brush elements spaced apart along the axis of the rotor; or a rotor as set out in our published pending U.K Patent Applications Nos. 2099272A and 2107963A, both of which disclose pick-up and conditioning rotors in which the crop engaging elements are formed of thick, stiff, plastics sheeting.

Conveniently the impact detector may consist of one or more accelerometers, microphones, or other vibration or acoustic sensors.

The output of the detector may conveniently be coupled by way of a high-pass filter to a comparator circuit. A reference signal source may be connected to the comparator circuit so that output signals from the detection means due to vibrations in the hood having frequencies above the cut-off frequency of the filter and having an amplitude above a predetermined level determined by the reference signal, indicate the impact on the hood of objects differing from the crop, for example, stones and like objects.

Preferably, control means for controlling the deflector means includes a first timing circuit which ensures that, after actuation, the deflector means remains in the path of the detected object for the period of a typical deflection and for a predetermined interval thereafter before being restored to a position outside the crop path. Preferably a second timing circuit is also provided to ensure that after the deflector means has been returned to its normal position (that is to say removed from its position for deflecting stones and the like) it remains in that position for a second predetermined time interval. The purpose of this second interval is to prevent vibrations caused by the restoration of the deflector means for operating the detection means.

Control means may comprise an actuator (preferably a solenoid actuator for a hydraulic ram) coupled to the moveable deflector means and having two stable positions, the actuator being arranged to be set in one stable position in which the deflector means is in the path of the crop stream containing a detected object when the detector means output indicates that an object has been detected, and the actuator being coupled to the timing circuits to be reset to its other stable position at the end of the first timing interval determined by the first timing circuit. Means may be provided for inhibiting the triggering of the actuator again to its said one position until the end of the second timing interval of the second timing circuit.

The output signals from the electromagnetic detector may be arranged to operate the control means in generally similar manner to that described for the impact detector.

It is to be appreciated that various alternative methods of actuating the crop deflector may be adopted, for example a pneumatic piston or other actuating device.

Preferably the inner surface of the moveable hood or hood portion has a number of changes of direction so as to provide more than one distinct surface around the hood. This makes a recordable impact more likely than if the interior of the rotor were a smooth curve. Stones tend to be flung outwardly by the rotor and to travel around the inside of the hood. Where there is a change of direction in the inner surface of the hood, there are more opportunities for the stone to strike the inner surface of the hood.

The said diverting means may comprise a moveable member which is moveable into the path of the crop stream to deflect an unwanted object from the normal path of crop flow. Alternatively or in addition the diverting means may comprise a moveable member which is moveable out of the path of the crop stream to allow an unwanted object to divert from the normal path of crop flow. In one convenient form the diverting means may comprise one or more doors openable in the underside of a housing beneath an auger for conveying the crop at a position downstream of the high-speed conveying rotor, the doors being openable in response to detection of an unwanted object in the crop stream by the said detection means.

In an alternative form of the invention, the or part of the detecting means may be mounted in a hollow bridge member which extends across the path of conveyed crop and is static relative to the main frame. Thus either or both of the impact detector and the mounted electromagnetic detector mentioned above may be mounted in the static hollow bridge instead of in the hollow enclosure member of movable hood or hood portion.

Possible types of object detection means include acoustic, optical, magnetic, electromagnetic and other forms using, for example, waves, rays and reflectance techniques. A particularly high degree of effectiveness is achieved when impact sensing of sizeable metallic and non-metallic objects is combined with an independent system of detecting metallic objects of most sizes, including pieces of wire. In such a case, the output signal from the metal detecting means is processed electronically in the same way as the output signal from the impact sensor, there being provided in the electronic circuit an OR/AND gate to accept signals from the two kinds of detector.

In some broad aspects of the invention, it is not always essential that the pick-up rotor be arranged with its axis parallel to the ground and carrying crop upwardly and rearwardly over the rotor. In a much more general and widely applicable case it is merely necessary that the rotor is mounted for rotation to accelerate and convey crop lying on the ground or fed to it by another means, and that the rotor accelerates and conveys the crop upstream of the intake region. This arrangement covers rotors lying at an angle to the horizontal, up to the vertical.

In other broad aspects of the invention, it is not essential that there is provided mounting means for mounting the hood or a portion thereof so as to be moveable relative to the frame during operation, the hood or the hood portion being moveable in response to, and by the effect of, the crop to effect automatic adjustment of the clerance of the entrance to the crop flow passage. Such arrangements encompass the combination of an impact sensor attached to a fixed-position rotor cover and a metal detecting means attached to a separate bridge or other mounting member, which may be fully adjustable. In such arrangements, a hollow enclosure member of the rotor cover may be provided and may be fixed after adjustment.

In general, the invention encompasses in the context of detecting metal objects in a passing crop stream the concepts of open and transparent windows on the stream, and crop collecting/conveying rotors having an outer annular zone which is free from metal components, and rotors being wholly made from non-metallic materials.

In accordance with another aspect of the present invention there may be included the feature of a mounting means for mounting the hood so as to be moveable by pivotal movement relative to the frame during operation, the hood being moveable in response to, and by the effect of, the crop to effect automatic adjustment of the clearance at the entrance to the crop flow passage, the hood being mounted in such a manner that an increase in crop load produces circumferential movement of the hood around the rotor in the direction of crop flow and increases both the vertical clearance between the front of the hood and the ground and the horizontal clearance between the front of the hood and the rotor at the entrance to the crop flow passage, the shape of the hood and the position of its pivot axis being such that the said movement of the hood is achieved by pivotting of the hood about a single pivot axis.

Conveniently the said single pivot axis is spaced from the inner surface of the hood facing the outer periphery of the rotor, and is spaced from the said axis of rotation of the rotor, and preferably the said single pivot axis of the hood lies between the outer periphery of the rotor and the said axis of rotation of the rotor.

Preferably the said single pivot axis lies at a position higher than the axis of rotation of the rotor and most preferably the said single pivot axis lies at a position higher than the said axis of rotation of the rotor, but lower than the highest portion of the hood when the moveable hood is in its lowest position.

Embodiments of the invention will now be described by way of example with reference to the accompanying drawings in which:—

Figure 1 is a diagrammatic side view of an embodiment of the invention for picking up and conveying a cut crop, and shows a moveable curved hood in front of and partly above a rotor;

Figure 1(a) is a diagrammatic perspective view from the front of the apparatus shown in Figure 1;

Figure 2 is a diagrammatic side view of a modification of the apparatus shown in Figure 1;

Figure 3 is a block circuit diagram of means for detecting stones and metal and for controlling a deflector means shown in the preceding figures;

Figures 4 and 4(a) show a diagrammatic side view and diagrammatic front view respectively of a further embodiment of the invention; and

Figure 5 shows a diagrammatic side section of an alternative form of hollow hood which may be used in the apparatus of Figure 4 or Figure 1, in embodiments of the invention;

Figure 6 is a diagrammatic front view of an arrangement of coils in an electromagnetic detector embodying the present invention; and

Figures 7 and 7(a) show a diagrammatic side view and diagrammatic front view respectively of a further embodiment of the invention.

Referring to Figures 1 and 1(a), there is shown a crop pick-up apparatus comprising a high-speed rotor 21 mounted on a mobile frame 50 for movement over the ground 13 to pick up previously cut crop. The pick-up rotor 21 is mounted between substantial side plates of the frame 50 and is driven by the pto of a tractor through a conventional drive linkage 52, terminating at 53 (Figure 1(a)). The rotor 21 is formed of a brush-like structure as set out in our previous published U.K. Patent Application No. 2075816A, although the rotor may be of other constructions, including those shown in our published U.K. Patent Applications Nos. 2099272A and 2107963A. In the example as shown in Figure 1, the rotor 21 is rotated in a clockwise direction so as to pick up cut crop from the ground and to convey the crop upwardly and rearwardly over the rotor 21.

A curved hood 54 extends over the front of the rotor 21, and in the particular example shown is formed of transparent synthetic plastics material, which allows an operator of the apparatus to view the operation of the rotor. The hood is constructed in such a way that it does not effectively obstruct any of the sensors, to be described hereinafter. Referring to Figure 1, the hood 54 is mounted by two pivotted arms 55 and 56 to the side plate of the main frame 50, and corresponding pivotted arms are provided on the other side of the apparatus. An optional device is linked to the side frame, and biases the hood into the forward and downward position by the effect of a spring. The hood may be adjustably spring loaded.

Suspended in front of the hood 54 is a protective curtain 19 suspended from a bar 20 preceding the rotor 21. The curtain 19 serves the additional purpose of guiding the crop under the floating hood 54. The curtain 19 is shown in its rest position in full lines, and in broken lines there is shown the normal deflected position of the curtain 19 during forward movement of the apparatus over the crop.

In Figure 1(a), the hood 54 is shown at its lowermost and most forward position. In Figure 1 the hood is shown in full lines in its closest position to the rotor and in broken lines in the maximum deflected position.

In operation crop is picked up by the rotor 21 and lifted upwardly and rearwardly over the rotor 21 and is fed to a floating auger 71 in a trough for conveying the crop laterally, usually by inverse flighting to the centre region. The auger 71 may rotate in either direction, and the leading edge of the auger trough may be fitted optionally with a freely rotating, or driven, transfer roller 71A to prevent crop accumulations. After the crop leaves the auger 71, two rollers 74 and 75 feed the crop towards a conventional chopping mechanism of a forage harvester, indicated generally at 72 in Figure 1(a). Where the crop load is light, the hood 54 will be in its rearward and lower position, but where the crop is heavier, either with a greater bulk or higher friction, or a combination of both, the hood 54 will rise upwardly and forwardly to allow greater clearances in the crop passage between the hood 54 and the rotor 21.

As shown particularly in Figure 1, there is positioned to the rear of the rotor hood 54 a deflector plate 22 extending transversely across the apparatus between the sides of the frame 50. The deflector plate 22 is pivoted at 23 and can pivot downwardly at the rear to a position shown in dotted lines and indicated at 22'.

The deflector plate 22 acts both as a crop guide in normal operation (shown in full lines) and as a deflector for crop contaminated with stones, metal and other objects when in the lower position (shown in broken lines).

The movement of the deflector plate 22 is controlled by a control means 24 indicated diagrammatically by a box shown mounted on the side of the frame 50 at 24 in Figure 1(a). The control means 24 may conveniently comprise an electronic control means for analysing detection signals, to be described hereinafter, and a solenoid actuator or pneumatic or hydraulic ram 24A operative to move the deflector plate 22. The plate may be adjustably spring loaded.

Mounted on the movable hood 54 is an impact sensor (e.g. an accoustic detector), indicated diagrammatically at 25A. The detector 25A is arranged to detect vibrations caused by stones and like objects striking the floating hood 54, and the detector 25A feeds electrical signals to the control means 24.

There is also mounted on the apparatus a second detector comprising for example an electromagnetic detector 25B, which is mounted on a transverse support bar forming a static bridge extending over the path of movement of the conveyed crop and conveniently secured to the sides of the main frame 50. Conveniently the electromagnetic detector 25B comprises a single induction coil or a system of coils producing an electromagnetic field which is disturbed by passage of metal objects in the crop stream, the coil or coils being arranged to detect any such disturbance and feed corresponding electrical signals to the control means 24.

It is to be noted that instead of the rejection of the short section of the crop stream containing the unwanted object being achieved by the overhead deflector plate 22, the leading portion of the feed auger trough can be made to pivot or slide upwards to block the entrance to the trough, and optionally this may be combined with the overhead deflector plate 22, or a shorter separate flat or curved deflecting means, pivoting downwardly. Optionally also, the trough 71B beneath the feed auger 71 operating in the undershot mode may consist of two pivotted doors (similar to "bomb" doors on an aircraft) which can be triggered to open away from each other in response to a detector signal, the actuating mechanism being so designed that a smaller downstream door 71D opens marginally before and closes marginally after an upstream door 71C. As an alternative, a larger, single, "bomb" door may be pivotted upstream. With the "bomb" door system of object removal, it becomes unnecessary to leave a gap between the high-speed pick-up rotor 21 and the feed mechanism 71 of the harvester.

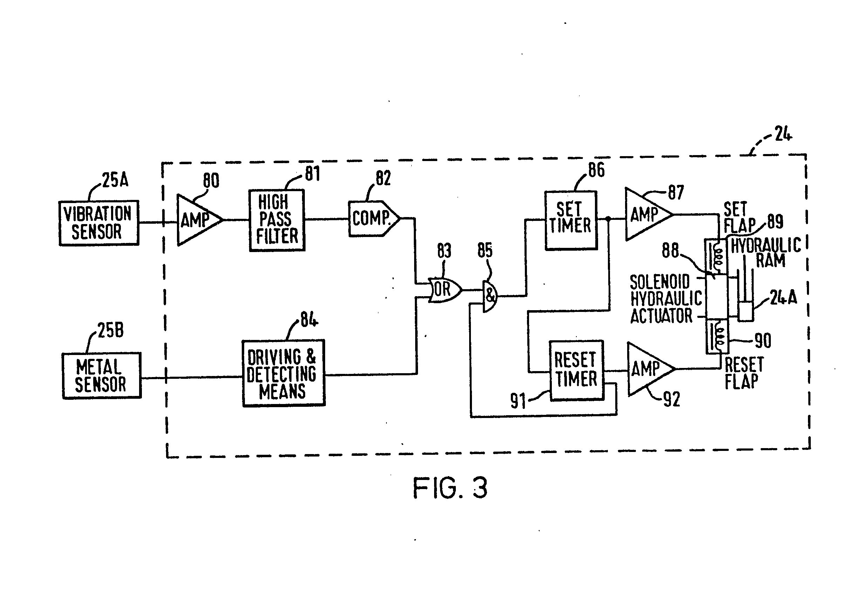

In Figure 3 there is shown a diagrammatic block circuit diagram of the control means 24. The vibration detector 25A feeds output signals to an amplifier 80 which passes the amplified signal to a high pass filter 81 for filtering out signals resulting from vibrations occurring during normal operation of the device. The output of the high pass filter 81 is fed to a comparator 82 which compares the vibration signal with a threshold value, and provides an output if the vibration signal exceeds a predetermined value. The output of the comparator 82 is fed to an OR gate 83.

The metal sensor 25B similarly feeds output electrical signals to driving and detecting means 84 which effect similar amplifying, filtering, and comparison functions to the components 80, 81 and 82. The driving and detecting means 84 produces an output signal when a typical signal is detected by the metal sensor 25B, and the resulting output signal is fed to the OR gate 83.

The output of the OR gate 83 is fed to a AND gate 85, the output of which is fed to a set timer 86 which determines the time for which the deflector plate 22 shall be lowered, upon detection of an unwanted object. The output of the set timer 86 is amplified in amplifier 87 and fed to a solenoid hydraulic actuator 88, which has a solenoid 89 for setting the deflector plate 22 to the lower position, and an actuator 90 for resetting the plate 22 to the upper position. The hydraulic actuator 88 is coupled hydraulically to the hydraulic ram 24A.

The output of the set timer 86 is also fed to a reset timer 91, the output of which is amplified by an amplifier 92 and is then fed to the reset solenoid 90 of the hydraulic actuator 88. The output of the reset timer 91 is also inverted and fed to the second input of the AND gate 85 so that this input is normally held at a logical high level. The reset timer 91 is arranged to provide an output to the reset solenoid 90 at the time the system is turned-on so that in normal operation the plate 22 is held in the upper position by the ram 24A, and one input of the AND gate 85 is normally receiving an output signal from the reset timer 91.

In operation, if either the vibration sensor 25A, or the metal sensor 25B, (or both), produce a signal indicating presence of an unwanted object, a trigger signal passes through the OR gate 83 and the AND gate 85 to the set timer 86 which energises the set flap solenoid 89 so that the actuator 88 actuates the ram 24A to lower the plate 22. After a predetermined time the reset timer 91 produces an output signal which actuates the reset flap solenoid 90 to raise the plate 22, and at the same time removes the signal from the AND gate 85 to disable the circuit from responding to any vibrations which might be caused when the deflector means are raised. After a second pre-determined time the reset time 91 reverts to its normal state and feeds a signel to the AND gate 85 to allow the circuit to be ready for the next object detection signal from the OR gate 83.

If an object is picked up by the rotor, and then falls back to the ground and is lifted up again, perhaps several times, this will result in many impacts. The delay arrangement in the control circuits is such that the plate 22 is held in the deflecting position throughout the multiple impacts, and is only released after the said pre-determined time interval has elapsed after the last of the multiple impacts.

In general, the control means 24 may operate so far as the vibration sensor 25A is concerned, in the manner set out in our published U.K. Patent No. 1602475, and the analysis of signals from the electromagnetic detector 25B may proceed in a generally corresponding manner.

By way of example, the time taken from the instant of a foreign object impacting with the hood and the deflector being in the fully operative position may be <0.2s and within 1s of the impact the deflector can be returned to its normal rest position.

Referring now again to Figure 1, the operation of the apparatus will be considered. On leaving the rotor cover 54, the conveyed crop bridges an air gap between the rotor 21 and the auger 71, and is directed rearwardly by the near-horizontal plate 22 suspended on pivot arms 23A from the pivot 23, and resting on stops 50A of the main frame 50. The hydraulic piston 24A acts on a central pivot arm 23A, there may be provided a number of pivot arms across the width of the deflector plate 22. If the piston 24A is actuated by the object detection system in response to a signal generated by a foreign object, the deflector plate 22 is tilted downwards at the rear until it makes contact with a second set of stops 50B on the side plates of the main frame 50. The crop stream is then directed back towards the rotor 21 and steeply downwardly at the rear so that it passes momentarily through the gap between the pick-up rotor 21 and the housing of the auger 71. At the end of the timed interval, the piston travel in the ram 24A is reversed and the deflector plate 22 is raised, allowing the crop to continue in the normal direction of flow into the auger 71.

In Figure 1, and also in subsequent figures, there are shown a number of alternative positions of the metal sensor 25B and the impact sensor 25A. In all cases, the metal sensor is indicated diagrammatically by a rectangular symbol, and the impact sensor is indicated by a circle.

In its broadest aspect, the metal detector of the invention encompasses a system for detecting the presence of metallic objects by measuring a parameter of the crop flow, and detecting in that measured parameter an atypical signal resulting from the presence of metal. Possible types of object detection include optical, magnetic, electro-magnetic, and other forms using, for example, waves, rays and reflectance techniques. Apart from impact sensing, most other detection techniques require transparent or open "windows" on the crop stream, if they are to be sufficiently sensitive and effective. A transparent window is provided if all of the moving hood or that portion between the sensor and the crop stream, is made of material which does not interfere with the sensing means. Such material will often be non-metallic, particularly of plastics, resins or compound materials. An open window is provided where there is an aperture between the crop stream and the sensing means which is totally unobstructed. In contrast, a transparent window provides a physical barrier to the crop, but not to the sensing means.

Consideration must also be given to the materials from which the rotor, and other apparatus components, are made, in that the detecting means may include in its field of view moving components which may interfere with detection. A choice may be made as to whether the sensor should be a fixed position sensor which is fixed relative to the main frame, or a moving sensor where the sensor is secured to the moving hood or moving hood portion. Where the detecting means has a fixed position (both with regard to distance and angular relationship) to any part of the pick-up rotor which may interfere with the detection system, this facilitates avoidance of strong interference signals from machine components, by techniques of focusing the sensitive field or zone, or by filtering, programming out, or otherwise taking account of regular interference signals. On the other hand, if the detecting means is fixed relative to the main frame, the location of the crop stream relative to the fixed-position sensors may change, albeit marginally, when the movable hood portion responds to changes in crop flow. The converse applies where the sensors are mounted to move with the moving hood portion. In such a case the position of the sensor changes relative to the rotor when the hood moves, but the position of the sensor may be arranged to be constant relative to the crop stream.

Whilst it is possible to account for interference signals from the core section of the rotor, it is preferable to focus the detection means so that the field or zone of greatest intensity is directed past the core section above or below. This is more easily and consistantly achieved with fixed-position sensors, but is not impossible when the sensing means is attached to the moveable hood. Thus in embodiments of the invention, the annular outer space of the pick up rotor is metal-free, and the core section may or may not contain metal components. It is possible to produce a high-speed pick-up rotor which is transparent to sensing means throughout the space which the rotor occupies, for example by using finned reinforced resin cores and plastics fasteners for the elements. Vertical end plates which define the rotor housing at each side may also be made of non-metallic material, or may be largely omitted. Similarly, the floating rotor hood and the suspension linkage may be made entirely of non-metallic shatter proof material, or alternatively only that part which acts as window on the crop stream from a metal sensor may be made of material which is transparent to the sensing means.

Referring again to Figure 1, in full lines, there is shown attached to the hood in the mid region the impact sensor 25A, which may be one of several, so positioned that ideally it is not in the field of scan of the separate metal sensing means 25B which covers the full width of the rotor housing. Alternative positions for the impact sensing means are indicated in broken lines, and these are to be regarded as examples with other positions being also possible. Attachment of the impact sensors is in such a way that they are able to pick up atypical vibrations but are not physically harmed by the impacts themselves.

In front of the transparent rotor housing 54 is shown in full outline the metal sensing bridge 25B, so focused that it scans through the crop flow into the metal-free space in front of and beneath the rotor core section which is indicated at 21A. Metal sensing elements in the alternative positions shown in broken outline, may be secured in a fixed position relative to the rotor 21, or may be attached to the moving hood 54. A metal sensor at the position indicated at 25B' scans practically horizontally through the crop stream in the direction of the rotor core 21A, whilst a metal sensor at the upper position indicated at 24B'' is focused into the space above the rotor core 21A.

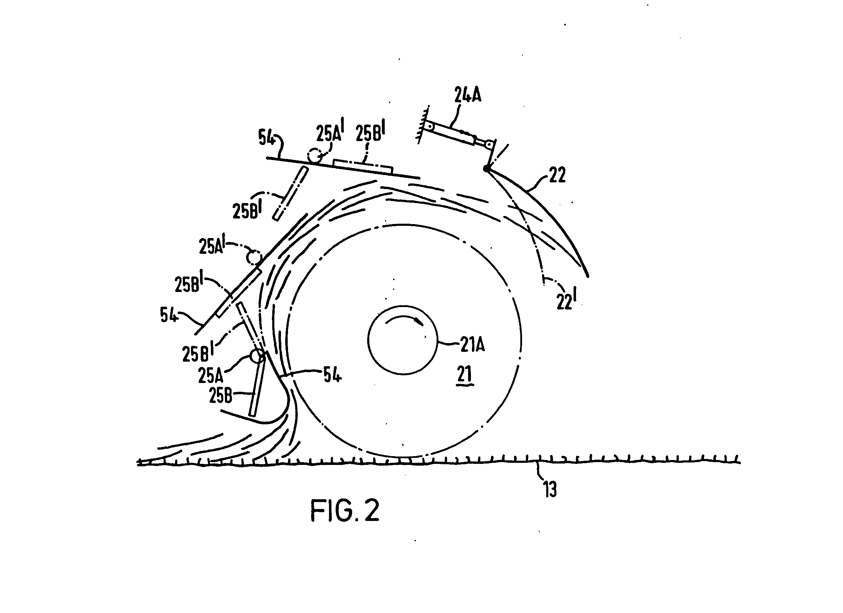

Figure 2 shows various modifications of apparatus embodying the invention. The moving portion 54 of the rotor front cover is shown to be so designed that a number of open windows on to the crop stream are created. Open windows are created between the moving hood section, and the forward part of a top fixed cover, and between that cover and the crop deflector plate 22. These open windows can be covered if necessary by a metal detecting bridge element. The moveable hood 54 is shown only in the closest position to the rotor 21. The lowest metal sensing element 25B is shown fitted forward of a channel portion 54 which is transparent to the detecting means 25B, the channel portion 54 also serving the purpose of guiding the crop into the pick up rotor 21. The alternative sensor positions 25B' may represent metal sensors in a fixed position, for example attached to the static side plates of the frame, or fixed to the moving housing. Similarly, alternative positions of the impact sensor 25A are also shown at 25A'. It should be noted that the metal detection means may be adjustable angularly, and in terms of its position up and down and fore and aft relatively to the conveying rotor.

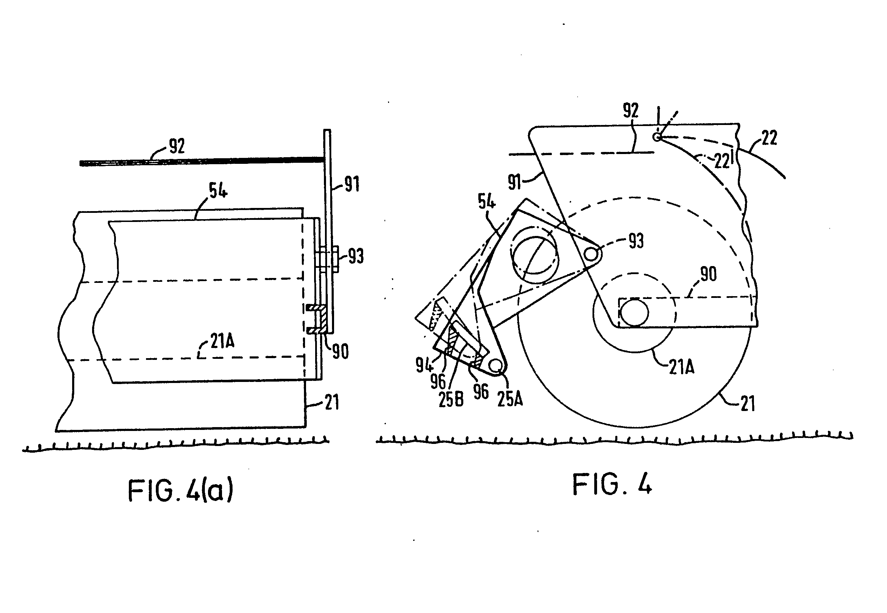

Figures 4 and 4a show respectively a diagrammatic side view, and a front view, of a further modified crop pick-up apparatus which embodies the invention. The rotor 21 is mounted at the end of a cantilevered support member 90 to which is also fitted a plastics side sheet 91. Between the side sheets 91 are fitted pivotally a front hood assembly 54, made preferably from fibreglass, with metal sensing means 25B and an impact sensor 25A. The apparatus has a static top cover 92, and a pivotted rear deflector plate 22. The operation of the apparatus is generally similar to that described with reference to the preceding figures.

It is to be noted that the apparatus shown in Figure 4 provides mounting means for mounting the hood so as to be moveable relative to the frame during operation, the hood being moveable in response to, and by the effect of, the crop to effect automatic adjustment of the clearance at the entrance to the crop flow passage, the hood being mounted for movement by pivotting about a single pivot axis and the shape of the hood and the relative position of the pivot axis and the axis of rotation of the rotor being arranged such that an increase in crop load increases both the vertical clearance between the front of the hood and the ground and the horizontal clearance between the front of the hood and the rotor at the entrance to the crop flow passage. By selecting the position of pivot point 93, together with the shape of the moveable hood portion 54, particularly the inclination of the exit portion, a wide range of variations in rotor housing clearances and crop flow characteristics may be obtained.

The main feature shown in Figures 4 and 4(a) is that, in accordance with an aspect of the present invention, the moveable hood portion 54 is formed in part by a hollow enclosure member 94. The electromagnetic detector 25B and the vibration sensor 25A are both mounted inside the hollow enclosure member 94. The electromagnetic detector 25B is mounted resiliently by mounts 96, and the vibration detector 25A is mounted on the inside of the member 94 by means (not shown) which allow the detector 25A to detect vibrations, but which protect the detector 25A from damage due to impact of substantial objects on the enclosure member 94.

Preferably the enclosure member 94 provides a total enclosure for the detector means 25A and 25B, and is sealed to prevent entry of dirt, dust, and moisture. Conveniently the whole moveable hood portion 54 is made of glass fibre, or other moulded synthetic material. Preferably the sensors 25A and 25B are mounted as low as possible within the enclosure member, to maximise the response time available for the mechanical rejection system 22.

It is to be appreciated that the hollow rotor cover the principle of which is shown in Figure 4, can also be provided in embodiments of the invention generally along the lines of the apparatus shown in Figure 1, that is to say with the moving hood portion supported on two spaced apart links along the trajectory of the crop flow.

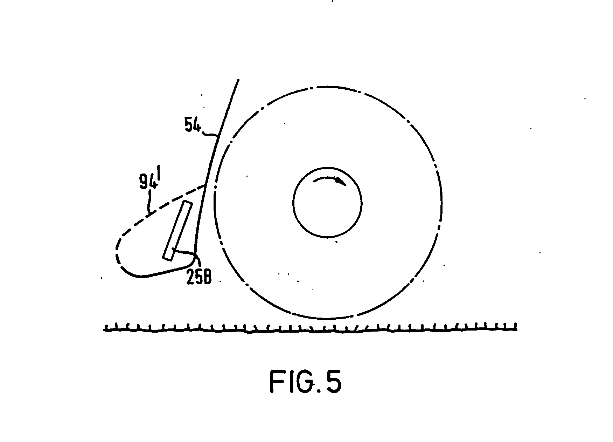

In Figure 5 there is shown diagrammatically a further form of a hollow enclosure member 94' which may house an electromagnetic detector 25B (Figure 5). The hollow enclosure member 94' may be mounted on a moveable hood portion, which may be a hood portion 54 in Figure 4 or a hood portion 54 in Figure 1. Alternatively, in Figure 5, the metal sensing element 25B may be a fixed position metal sensing element, and may be fitted forward of the intake guide plate, for example in the pear-shaped enclosure member 94' shown in Figure 5.

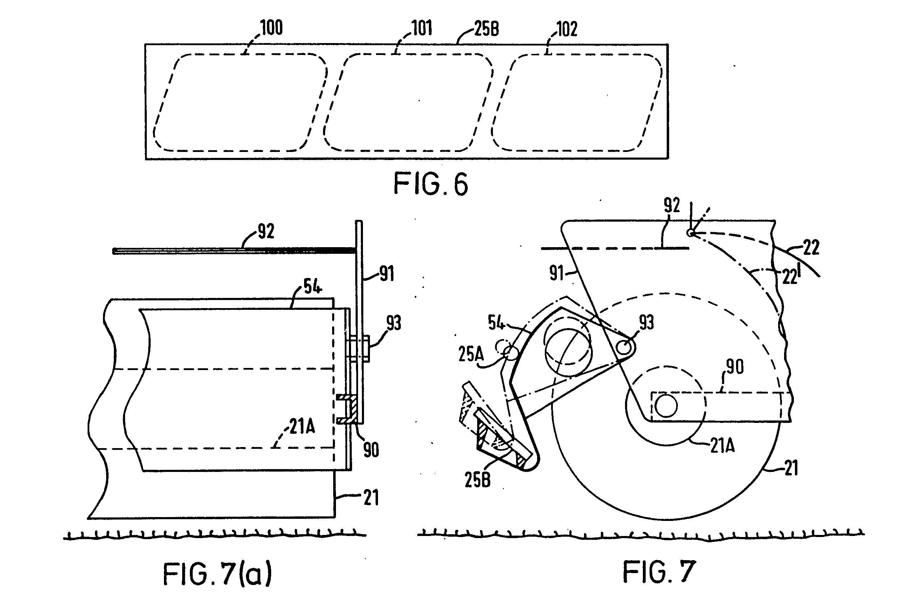

Figure 6 is a front view of an example of a metal detecting bridge, indicating in broken lines three trapezoidal, overlapping induction coils 100, 101, 102, which may be energised in turn to avoid gaps in the electromagnetic field created by the elements as a whole. For most applications on harvesting machines, it will be an advantage for the bridge elements to be adjustable angularly, up and down and fore and aft relative to the crop stream.

With reference to Figure 6, because crop windrows for harvesting are usually heap-shaped in cross-section, it is desirable that the sensitivity of a metal detection system is particularly high in the central region of the pick-up unit, where crop flow is concentrated. Higher sensitivity in the centre of the detector bridge shown in Figure 6 may be achieved relative to the outer coils by arranging for the energising current in the central coil to be higher. It should be noted that if current flow is equal and in the same direction in all the coils, electro-magnetically those parts of the loops which lie closely adjacent cancel each other out, and the effect of the coil arrangement becomes that of one large coil. Instead of the trapezoidal coil shape shown in Figure 7, the coils may be circular, square, hexagonal or polygonal in shape. By again arranging them transversely so that they overlap at least marginally across the direction of crop flow, this ensures complete coverage of the pick-up width. A circular or square coil shape may be found in many existing applications, and therefore mass-produced elements may be combined economically to cover readily in any width of pick-up unit. Using an array or succession of small coils, instead of one large coil, facilitates and makes more attractive and practical the use of printed-circuit coils.

Figures 7 and 7(a) show respectively a diagrammatic side view, and a front view, of a further modification of a crop pick-up apparatus embodying the invention. The rotor 21 is mounted at the end of a cantilevered support member 90 to which is also fitted a plastics side sheet 91. Between the side sheets 91 are fitted pivotally a front hood assembly 54, made preferably from fibreglass, with metal sensing means 25B and an impact sensor 25A. The apparatus has a static top cover 92, and a pivotted rear deflector plate 22. The operation of the apparatus is generally similar to that described with reference to the preceding figures.

It is to be appreciated that, in its broadest aspect, the system described in this patent application is suitable, provided appropriate adaptation is carried out, for inclusion in grain and other crop and material conveying systems, whether they are stationary or part of mobile harvesting or processing equipment, for example combine harvesters, pea viners, and so on.

**Claims**

1. Conveying apparatus comprising a main frame (50), a high speed conveying rotor (21) for conveying material comprising an inner core structure (21A) and a plurality of outwardly extending elements for engaging the material, a hood (54) co-operating with the rotor (21) and defining between the hood and part of the periphery of the rotor a passage along which material is conveyed by the rotor (21), detection means (25B) for detecting unwanted objects conveyed by the rotor (21) with the material, and

diverting means (22, 71C, 71D) for diverting for a short period of time that portion of the material stream containing the unwanted object so that it is prevented from proceeding further in the general direction of normal material flow,

characterised in that the said elements of the rotor are made of non-metallic material so as to provide an outer annular zone of the rotor (21) which is free of metal components, and the detection means comprises a detector (25B) for detecting metal by sensing a response to a signal generated by the detector caused only by the presence of metal in the material stream, the metal detector being mounted at a position forward of a vertical plane passing through the rotor axis, and being positioned with its field of detection directed so as to extend into the outer annular zone of the rotor which is free of metal components.

2. Apparatus according to claim 1 in which the detection means further comprises an impact detector (25A) for detecting impacts on the inner side of the hood (54) of unwanted objects other than the material being conveyed, the impact detector (25A) being mounted at a position forward of a vertical plane passing through the rotor axis.

3. Apparatus according to claim 1 or 2 for picking up and conveying crop, in which the frame is a mobile frame (50) for movement across the ground, the conveying rotor (21) is mounted for rotation about an axis transverse to the direction of forward movement of the apparatus and substantially parallel to the ground for picking up and conveying crop, and the hood (54) extends at least around part of the front half of the rotor (21) and defines with the rotor (21) the said passage, there being provided drive means for driving the conveying rotor (21) in rotation in a sense such that the rotor picks up crop and conveys the crop upwardly and rearwardly over the rotor.

4. Apparatus according to claim 3 in which the metal detector (25B) is mounted at a position close to the entrance to the said passage with its field of detection directed downwardly and rearwardly.

5. Apparatus according to any preceding claim including mounting means (55, 56, 93) for mounting the hood (54) so as to be moveable relative to the rotor (21) during operation, the hood (54) being moveable in response to, and by the effect of, the material to effect automatic adjustment of the clearance at the entrance to the said flow passage.

6. Apparatus according to any preceding claim in which the said metal detector (25B) is mounted on the said hood (54).

7. Apparatus according to any preceding claim when including an impact detector (25A) as set out in claim 2, in which the impact detector (25A) is mounted on the hood (54) at a position close to the entrance to the said flow passage.

8. Apparatus according to any preceding claim when including an impact detector (25A) as set out in claim 2 in which the hood (54) is formed at least in part by a hollow enclosure member (94), and the impact detector (25A) is mounted in the said hollow enclosure member (94) and is at least partly enclosed thereby.

9. Apparatus according to claim 8 in which the hollow enclosure member (94) forms a resonant chamber, which improves the detection of impacts by the impact detector (25A).

10. Apparatus according to claim 8 or 9 in which both the impact detector (25A) and the metal detector (25B) are mounted in the hollow member (94) of the moveable hood (54).

11. Apparatus according to any of claims 8 to 10 in which the said enclosed detector or detectors are entirely enclosed by the hollow enclosure member (94) of the hood, which is sealed to prevent access of dirt, dust and moisture to the detection means.

12. Apparatus according to any preceding claim when including an impact detector (25A) as set out in claim 2 in which the inner surface of the moveable hood (54) has one or more changes of direction so as to provide more than one distinct surface around the hood, arranged to increase the chances of a recordable impact on the interior of the hood (54).

13. Apparatus according to any preceding claim in which the said diverting means (22) is positioned to the rear of the rotor centre and is arranged in operation to deflect an unwanted object out of the normal path of crop flow downwardly to the ground.

14. Apparatus according to claim 5 in which the said metal detector (25B) is mounted on a member which is static relative to the frame in operation, and which extends across the path of the conveyed material in a position which leaves the metal detector (25B) free from interference by any metallic components of the rotor (21) and hood (54).

15. Apparatus according to any preceding claim in which the inner core structure (21A) of the conveying rotor (21) contains metal components, and the metal detector (25B) is arranged so that its field of greatest sensitivity is directed to avoid interference from the inner core structure (21A).

16. Apparatus according to any preceding claim in which the said hood (54) and/or the said engaging elements is or are made of synthetic plastics material.

17. Apparatus according to any preceding claim in which the said diverting means includes or consists of a moveable member (22) which is moveable into the path of the crop stream to deflect an unwanted object from the normal path of crop flow.

18. Apparatus according to any preceding claim in which the said diverting means includes or consists of a moveable member (71C and 71D) which is moveable out of the path of the crop stream to allow an unwanted object to divert from the normal path of crop flow.

19. Apparatus according to claim 18 in which the diverting means comprise one or more doors (71C and 71D) openable in the underside of a housing (71B) beneath an auger (71) for conveying the crop at a position downstream of the high-speed conveying rotor (21), the doors (71C and 71D) being openable in response to detection of an unwanted object in the crop stream by the said detection means.

20. Apparatus according to any preceding claim in which the said metal detector (25B) generates, in the presence of metal, an atypical signal comprising an optical, magnetic, or electromagnetic signal.

21. Apparatus according to any of claims 1 to 19 in which the said metal detector (25B) comprises an electromagnetic detector for detecting changes in an electromagnetic field which are caused by the presence of metal in the crop stream.

22. Apparatus according to any preceding claim when including an impact detector (25A) as set out in claim 2 in which the said impact detector consists of one or more accelerometers, microphones, or other vibration or acoustic sensors.

23. Apparatus according to any preceding claim when including a moveable hood as set out in claim 5 and when adapted for picking up and conveying crop as set out in claim 3, in which the hood (54) is mounted in such a manner that an increase in crop load produces movement of the hood (54) in the direction of crop flow along a path spaced from and lying around the outer periphery of the rotor (21), and increases both the vertical clearance between the front of the hood (54) and the ground and the horizontal clearance between the front of the hood (54) and the rotor (21) at the entrance to the crop flow passage, the shape of the hood (54) and the position of its pivot axis (93) being such that the said movement of the hood (54) is achieved by pivotting of the hood about a single pivot axis (93).

24. Apparatus according to claim 23 in which the said single pivot axis (93) is spaced from the inner surface of the hood (54) facing the outer periphery of the rotor (21), and is spaced from the said axis of rotation of the rotor.

25. Apparatus according to claim 23 or 24 in which the said single pivot axis (93) of the hood lies between the outer periphery of the rotor (21) and the said axis of rotation of the rotor (21).

26. Apparatus according to claim 23, 24 or 25 in which the said single pivot axis (93) lies at a position higher than the axis of rotation of the rotor (21).

27. Apparatus according to claim 26 in which the said single pivot axis (93) lies at a position higher than the said axis of rotation of the rotor (21), but lower than the highest portion of the hood (54) when the moveable hood is in its lowest position.

**Patentansprüche**

1. Fördervorrichtung mit einem Rahmen (50), mit einem Hochgeschwindigkeitsförderrotor (21) zum Fördern von Material, der einen inneren Kernaufbau (21A) und eine Vielzahl von sich nach außen erstreckenden Elementen für einen Angriff an dem Material aufweist, mit einer Haube (54), die mit dem Rotor (21) zusammenwirkt und zwischen der Haube und einem Teil der Umfangsfläche des Rotors einen Durchgang begrenzt, längs welcher Material von dem Rotor (21) gefördert wird, mit einer Erfassungseinrichtung (25B) zum Erfassen unerwünschter Objekte, die von dem Rotor (21) mit dem Material gefördert werden, und mit einer Ableiteinrichtung (22, 71C, 71D), um für einen kurzen Zeitraum den Anteil des Materialstromes, der das unerwünschte Objekt enthält, abzuleiten, so daß es daran gehindert wird, weiter in Hauptrichtung des normalen Materialstromes transportiert zu werden, dadurch gekennzeichnet, daß die Elemente des Rotors aus einem nicht-metallischen Material bestehen, so daß sie eine äußere ringförmige Zone des Rotors (21) bilden, welche frei von metallischen Komponenten ist, daß die Erfassungseinrichtung einen Detektor (25B) zum Erfassen von Metall durch Wahrnehmung eines Ansprechens auf ein Signal umfaßt, das von dem Detektor erzeugt wird, und das nur verursacht wird durch die Anwesenheit von Metall in dem Materialstrom, daß der Metalldetektor in einer Stellung vor einer Vertikalebene angeordnet ist, die durch die Rotorachse verläuft, und daß er so angeordnet ist, daß sein Erfassungsfeld derart gerichtet ist, daß es sich in die äußere ringförmige Zone des Rotors erstreckt, welche frei von Metallkomponenten ist.

2. Vorrichtung nach Anspruch 1, wobei die Erfassungseinrichtung ferner einen Aufpralldetektor (25A) zum Erfassen von Stößen unerwünschter Objekte auf die Innenseite der Haube (54) aufweist, die aus anderem Material als das zu fördernde Material bestehen, wobei der Aufpralldetektor (25A) in einer Stellung vor einer Vertikalebene angeordnet ist, die durch die Rotorachse verläuft.

3. Vorrichtung nach Anspruch 1 oder 2 zur Aufnahme und zum Fördern von Erntegut, wobei der Rahmen ein beweglicher Rahmen (50) für eine Bewegung über dem Boden ist, wobei der Förderrotor (21) zur Rotation um eine Achse quer zur Richtung der Vorwärtsbewegung der Vorrichtung und im wesentlichen parallel zum Boden zur Aufnahme und zum Fördern von Erntegut angeordnet ist, wobei die Haube (54) sich wenigstens teilweise um die vordere Hälfte des Rotors (21) erstreckt und mit dem Rotor (21) den Durchgang begrenzt und wobei eine Antriebseinrichtung zum Antreiben des Förderrotors (21) in Rotation in einer Richtung derart vorgesehen ist, daß der Rotor Erntegut aufnimmt und das Erntegut nach oben und nach hinten über den Rotor fördert.

4. Vorrichtung nach Anspruch 3, wobei der Metalldetektor (25B) in einer Stellung in Nähe des Eintritts in den Durchgang angeordnet ist und wobei das Erfassungsfeld nach unten und nach hinten gerichtet ist.

5. Vorrichtung nach einem der vorhergehenden Ansprüche, mit einer Befestigungseinrichtung (55, 56, 93) zum Befestigen der Haube (54) derart, daß sie während des Betriebs relativ zu dem Rotor (51) bewegbar ist, wobei die Haube (54) ansprechend auf und durch Wirkung des Materials bewegbar ist, um automatisch eine Anpassung der lichten Weite an dem Eintritt in den Stromdurchgang zu bewirken.

6. Vorrichtung nach einem der vorhergehenden Ansprüche, wobei der Metalldetektor (25B) an der Haube (54) befestigt ist.

7. Vorrichtung nach einem der vorhergehenden Ansprüche, mit einem Aufpralldetektor (25A) nach Anspruch 2, wobei der Aufpralldetektor (25A) an der Haube (54) in einer Stellung in Nähe des Eintritts in den Stromdurchgang befestigt ist.

8. Vorrichtung nach einem der vorhergehenden Ansprüche, mit einem Aufpralldetektor (25A) nach Anspruch 2, wobei die Haube (54) wenigstens zum Teil durch ein hohles Gehäuseelement (94) gebildet wird und wobei der Aufpralldetektor (25A) in dem hohlen Gehäuseelement (94) befestigt und wenigstens zum Teil von diesem umschlossen ist.

9. Vorrichtung nach Anspruch 8, wobei das hohle Gehäuseelement (94) eine Resonanzkammer bildet, welche die Erfassung von Stößen durch den Aufpralldetektor (25A) verbessert.

10. Vorrichtung nach Anspruch 8 oder 9, wobei sowohl der Aufpralldetektor (25A) als auch der Metalldetektor (25B) in dem hohlen Element (94) der bewegbaren Haube (54) angeordnet sind.

11. Vorrichtung nach einem der Ansprüche 8 bis 10, wobei der umschlossene Detektor oder die umschlossenen Detektoren vollständig von dem hohlen Gehäuseelement (94) der Haube umgeben sind, welche abgedichtet ist, um den Zugang von Schmutz, Staub und Feuchtigkeit zu der Erfassungseinrichtung zu verhindern.

12. Vorrichtung nach einem der vorhergehenden Ansprüche, mit einem Aufpralldetektor (25A) nach Anspruch 2, wobei die Innenfläche der bewegbaren Haube (54) eine oder mehrere Richtungswechsel aufweist, um mehr als eine unterschiedliche Fläche um die Haube zu schaffen, die derart angeordnet sind, um die Möglichkeiten eines aufzeichenbaren Stoßes auf das Innere der Haube (54) zu erhöhen.

13. Vorrichtung nach einem der vorhergehenden Ansprüche, wobei die Ableiteinrichtung (22) hinter dem Rotorzentrum vorgesehen und im Betrieb derart angeordnet ist, daß ein unerwünschtes Objekt aus den normalen Weg des Erntegutstromes nach unten auf den Boden abgeleitet wird.

14. Vorrichtung nach Anspruch 5, wobei der Metalldetektor (25B) an einem Element befestigt ist, welches im Betrieb relativ zu dem Rahmen feststehend ist und welches sich quer über den Weg des geförderten Materials in einer Stellung erstreckt, welche den Metalldetektor (25B) unbeeinflußt von Beeinflussungen durch irgendwelche metallischen Komponenten des Rotors (21) und der Haube (54) läßt.

15. Vorrichtung nach einem der vorhergehenden Ansprüche, wobei der innere Kernaufbau (21A) des Förderrotors (21) metallische Komponenten aufweist und wobei der Metalldetektor (25B) derart angeordnet ist, daß sein Feld mit der größten Empfindlichkeit derart gerichtet ist, daß eine Beeinflussung durch den inneren Kernaufbau (21A) vermieden wird.

16. Vorrichtung nach einem der vorgehenden Ansprüche, wobei die Haube (54) und/oder die Angriffselemente aus Kunststoffmaterial bestehen.

17. Vorrichtung nach einem der vorhergehenden Ansprüche, wobei die Ableiteinrichtung ein bewegliches Element (22) aufweist oder aus diesem besteht, welches in den Weg des Erntegutstromes hineinbewegbar ist, um ein unerwünschtes Objekt aus dem normalen Weg des Erntegutstromes abzuleiten.

18. Vorrichtung nach einem der vorhergehenden Ansprüche, wobei die Ableiteinrichtung ein bewegbares Element (71C und 71D) aufweist oder aus diesem besteht, welches aus dem Weg des Erntegutstromes herausbewegbar ist, um zu ermöglichen, daß ein unerwünschtes Objekt aus dem normalen Weg des Erntegutstromes abgeleitet wird.

19. Vorrichtung nach Anspruch 18, wobei die Ableiteinrichtung eine oder mehrere Türen (21C und 21D) aufweist, die in der Unterseite eines Gehäuses (71B) unterhalb einer Schnecke (71) geöffnet werden können zum Fördern des Ernteguts in einer Stellung stromabwärts des Hochgeschwindigkeitsförderrotors (21), wobei die Türen (71C und 71D) ansprechend auf die Erfassung eines unerwünschten Objektes in dem Erntegutstrom durch die Detektoreinrichtung geöffnet werden können.

20. Vorrichtung nach einem der vorhergehenden Ansprüche, wobei der Metalldetektor (25B) bei Anwesenheit von Metall ein atypisches Signal erzeugt, das ein optisches, magnetisches oder elektromagnetisches Signal umfaßt.

21. Vorrichtung nach einem der Ansprüche 1 bis 19, wobei der Metalldetektor (25B) einen elektromagnetischen Detektor zur Erfassung von Veränderungen in einem elektromagnetischen Feld umfaßt, welche durch die Anwesenheit von Metall in dem Erntegutstrom verursacht werden.

22. Vorrichtung nach einem der vorhergehenden Ansprüche, mit einem Aufpralldetektor (25A) nach Anspruch 2, wobei der Aufpralldetektor aus einem oder mehreren Beschleunigungsmessern, Mikrophonen oder anderen Schwingungs- oder akustischen Sensoren besteht.

23. Vorrichtung nach einem der vorhergehenden Ansprüche, mit einer bewegbaren Haube nach Anspruch 5 und zum Aufnehmen und Fördern von Erntegut nach Anspruch 3, wobei die Haube (54) derart angeordnet ist, daß ein Zunehmen der Erntegutmasse eine Bewegung der Haube (54) in Richtung des Erntegutstromes längs eines Weges erzeugt, der von dem Außenumfang des Rotors (21) beabstandet ist und um den Außenumfang des Rotors (21) liegt, und sowohl der vertikale Abstand zwischen der Vorderseite der Haube (54) und dem Boden und der horizontale Abstand zwischen der Vorderseite der Haube (54) und dem Rotor (21) am Eintritt zu dem Erntegutstromdurchgang vergrößert werden, wobei die Form der Haube (54) und die Lage ihrer Schwenkachse (93) derart sind, daß die Bewegung der Haube (54) erhalten wird durch Verschwenken der Haube um eine einzige Schwenkachse (93).

24. Vorrichtung nach Anspruch 23, wobei die einzige Schwenkachse (93) im Abstand zu der Innenfläche der Haube (54), die zu der äußeren Umfangsfläche des Rotors (21) gerichtet ist, und im Abstand zu der Rotationsachse des Rotors angeordnet ist.

25. Vorrichtung nach Anspruch 23 oder 24, wobei die einzige Schwenkachse (93) der Haube zwischen der äußeren Umfangsfläche des Rotors (21) und der Rotationsachse des Rotors (21) liegt.

26. Vorrichtung nach Anspruch 23, 24 oder 25, wobei die einzige Schwenkachse (93) in einer Stellung höher als die Rotationsachse des Rotors (21) liegt.

27. Vorrichtung nach Anspruch 26, wobei die einzige Schwenkachse (93) in einer Position höher ist als die Rotationsachse des Rotors (21) aber niedriger als der höchste Bereich der Haube (54) liegt, wenn die bewegbare Haube in ihrer untersten Stellung angeordnet ist.

## Revendications

1. Appareil de transport comportant un cadre principal (54), un rotor de transport à grande vitesse (21) pour transporter de la matière comportant une structure centrale interne (21A) et une pluralité d'éléments s'étendant vers l'extérieur pour engager la matière, un capot (50) coopérant avec le rotor (21) et définissant entre le capot et une partie de la périphérie du rotor un passage le long duquel de la matière est transportée par le rotor (21), des moyens de détection (25B) pour détecter des objets indésirables transportés par le rotor (21) avec la matière, et des moyens de détournement (22, 71C, 71D) pour détourner sur une courte période là partie du courant de matière contenant l'objet indésirable, l'empêchant ainsi d'aller plus loin dans la direction générale de l'écoulement de matière normal, caractérisé en ce que les dits éléments du rotor sont réalisés en matière non métallique de façon à procurer une zone annulaire externe du rotor (21) qui soit sans composants métalliques, et en ce que les moyens de détection comprennent un détecteur (25B) pour détecter du métal en captant une réponse à un signal généré par le détecteur provoquée uniquement par la présence de métal dans le courant de matière, le détecteur de métaux étant monté dans une position à l'avant d'un plan vertical passant par l'axe du rotor et étant positionné avec son champ de détection dirigé de façon à s'étendre dans la zone annulaire externe du rotor sans composants métalliques.

2. Appareil selon la revendication 1, dans lequel les moyens de détection comportent en outre un détecteur d'impact (25A) pour détecter des impacts, sur le côté interne du capot (54), d'objets indésirables autres que la matière transportée, le détecteur d'impact (25A) étant monté dans une position à l'avant d'un plan vertical passant par l'axe du rotor.

3. Appareil selon la revendication 1 ou 2, pour ramasser et transporter de la récolte, dans lequel le cadre est un cadre mobile (50) destiné à se déplacer sur le sol, dans lequel le rotor de transport (21) est monté à rotation autour d'un axe transversal à la direction de déplacement avant de l'appareil et sensiblement parallèle au sol afin de ramasser et transporter de la récolte, et dans lequel le capot (54) s'étend au moins autour d'une partie de la moitié avant du rotor (21) et définit avec le rotor (21) le dit passage, des moyens d'entraînement étant prévus pour entraîner en rotation le rotor de transport (21) dans un sens tel que le rotor ramasse la récolte et la transporte vers le haut et vers l'arrière au dessus du rotor.

4. Appareil selon la revendication 3, dans lequel le détecteur de métaux (25B) est monté dans une position proche de l'entrée du dit passage avec son champ de détection dirigé vers le bas et vers l'arrière.

5. Appareil selon l'une quelconque des revendications précédentes, comprenant des moyens de montage (55, 56, 93) pour monter le capot (54) de façon qu'il soit mobile par rapport au rotor (21) pendant le fonctionnement, le capot (54) étant mobile en réponse à, et sous l'effet de, la matière afin d'effectuer un ajustement automatique de l'écartement à l'entrée du dit passage d'écoulement.

6. Appareil selon l'une quelconque des revendications précédentes, dans lequel le dit détecteur de métaux (25B) est monté sur le dit capot (54).

7. Appareil selon l'une quelconque des revendications précédentes lorsqu'il comporte un détecteur d'impact (25A) conformément à la revendication 2, dans lequel le détecteur d'impact (25A) est monté sur le capot (54) dans une position proche de l'entrée du dit passage d'écoulement.

8. Appareil selon l'une quelconque des revendications précédentes lorsqu'il comporte un détecteur d'impact (25A) conformément à la revendication 2, dans lequel le capot (54) est formé au moins en partie par un élément de protection creux (94) et dans lequel le détecteur d'impact (25A) est monté dans le dit élément de protection creux (94) et y est au moins partiellement enfermé.

9. Appareil selon la revendication 8, dans lequel l'élément de protection creux (94) forme une chambre résonante, ce qui améliore la détection d'impacts par le détecteur d'impact (25A).

10. Appareil selon la revendication 8 ou 9, dans lequel le détecteur d'impact (25A) et le détecteur de métaux (25B) sont tous deux montés dans l'élément creux (94) du capot mobile (54).

11. Appareil selon l'une quelconque des revendications 8 à 10, dans lequel le ou les dits détecteurs enfermés sont totalement enfermés dans l'élément de protection creux (94) du capot qui est rendu étanche pour empêcher la saleté, la poussière et l'humidité d'atteindre les moyens de détection.

12. Appareil selon l'une quelconque des revendications précédentes lorsqu'il comporte un détecteur d'impact (25A) conformément à la revendication 2, dans lequel la surface interne du capot mobile (54) présente un ou plusieurs changements de direction de façon à fournir plus d'une surface distincte autour du capot pour augmenter les chances d'un impact enregistrable à l'intérieur du capot (54).

13. Appareil selon l'une quelconque des revendications précédentes, dans lequel les dits moyens de détournement (22) sont positionnés à l'arrière du centre du rotor et sont disposés en fonctionnement pour dévier un objet indésirable vers le bas jusqu'au sol hors de la trajectoire normale de l'écoulement de récolte.

14. Appareil selon la revendication 5, dans lequel le dit détecteur de métaux (25B) est monté sur un élément qui est fixe par rapport au cadre lors du fonctionnement et qui s'étend en travers de la trajectoire de la matière transportée dans une position qui laisse le détecteur de métaux (25B) sans interférence de la part de tout composant métallique du rotor (21) et du capot (54).

15. Appareil selon l'une quelconque des revendications précédentes, dans lequel la structure centrale interne (21A) du rotor de transport (21) contient des composants métalliques, et dans lequel le détecteur de métaux (25B) est disposé de sorte que son champ de plus grande sensibilité est dirigé pour éviter une interférence de la part de la structure centrale interne (21A).

16. Appareil selon l'une quelconque des revendications précédentes, dans lequel le dit capot (54) et/ou les dits éléments d'engagement sont réalisés en matière plastique synthétique.

17. Appareil selon l'une quelconque des revendications précédentes, dans lequel les dits moyens de détournement comprennent ou consistent en un élément mobile (22) qui est mobile dans la trajectoire du courant de récolte afin de dévier un objet indésirable de la trajectoire normale de l'écoulement de récolte.

18. Appareil selon l'une quelconque des revendications précédentes, dans lequel les dits moyens de détournement comprennent ou consistent en un élément mobile (71C et 71D) qui est mobile hors de la trajectoire du courant de récolte pour permettre de détourner un objet indésirable de la trajectoire normale de l'écoulement de récolte.

19. Appareil selon la revendication 18, dans lequel les moyens de détournement comprennent une ou plusieurs portes (71C et 71D) pouvant s'ouvrir sur le côté inférieur d'un carter (71B) d'une vis (71) pour transporter la récolte en aval du rotor de transport à grande vitesse (21), les portes (71C et 71D) pouvant s'ouvrir en réponse à la détection d'un objet indésirable dans le courant de récolte par les dits moyens de détection.

20. Appareil selon l'une quelconque des revendications précédentes, dans lequel le dit détecteur de métaux (25B) génère, en présence de métal, un signal atypique comportant un signal optique, magnétique ou électromagnétique.

21. Appareil selon l'une quelconque des revendications 1 à 19, dans lequel le dit détecteur de métaux (25B) comporte un détecteur électromagnétique pour détecter des changements dans un champ électromagnétique qui sont provoqués par la présence de métal dans le courant de récolte.

22. Appareil selon l'une quelconque des revendications précédentes lorsqu'il comporte un détecteur d'impact (25A) conformément à la revendication 2, dans lequel le dit détecteur d'impact (25A) consiste en un ou plusieurs accéléromètres, microphones, ou autres capteurs acoustiques ou de vibration.

23. Appareil selon l'une quelconque des revendications précédentes lorsqu'il comporte un capot mobile conformément à la revendication 5, et lorsqu'il est adapté pour ramasser et transporter de la récolte conformément à la revendication 3, dans lequel le capot (54) est monté de telle manière qu'un accroissement de la charge de récolte produise un mouvement du capot (54) dans la direction de l'écoulement de récolte le long d'une trajectoire espacée de et située autour de la périphérie externe du rotor (21) et augmente à la fois l'écartement vertical entre l'avant du capot (54) et le sol et l'écartement horizontal entre l'avant du capot (54) et le rotor (21) à l'entrée du passage d'écoulement de récolte, la forme du capot (54) et la position de son axe de pivotement (93) étant telles que le dit mouvement du capot (54) est réalisé par pivotement du capot autour d'un axe de pivotement unique (93).

24. Appareil selon la revendication 23, dans lequel le dit axe de pivotement unique (93) est espacé de la surface interne du capot (54) faisant face à la périphérie externe du rotor (21) et est espacé du dit axe de rotation du rotor.

25. Appareil selon la revendication 23 ou 24, dans lequel l'axe de pivotement unique (93) du capot se trouve entre la périphérie externe du rotor (21) et le dit axe de rotation du rotor (21).

26. Appareil selon la revendication 23, 24 ou 25, dans lequel le dit axe de pivotement unique (93) se trouve dans une position plus élevée que l'axe de rotation du rotor (21).

27. Appareil selon la revendication 26, dans lequel le dit axe de pivotement unique (93) se trouve dans une position plus élevée que le dit axe de rotation du rotor (21) mais plus basse que la partie la plus élevée du capot (54) lorsque le capot mobile est dans sa position la plus basse.

FIG.1

FIG.1(a)

FIG. 2

EP 0 152 291 B1

EP 0 152 291 B1

24

25A
VIBRATION SENSOR

80 AMP

81 HIGH PASS FILTER

82 COMP.

83 OR

85 &

86 SET TIMER

87 AMP

SET FLAP

89 HYDRAULIC RAM

88 SOLENOID HYDRAULIC ACTUATOR

24A

90

25B
METAL SENSOR

84 DRIVING & DETECTING MEANS

91 RESET TIMER

92 AMP

RESET FLAP

FIG. 3

FIG. 4(a)

FIG. 4

EP 0 152 291 B1

FIG. 5

FIG. 6

FIG. 7(a)

FIG. 7

EP 0 152 291 B1